# EUROPEAN PATENT APPLICATION

(11) **EP 3 284 597 A1**
(43) Date of publication of application: **21.02.2018**
(21) Application number: 16780237.0
(22) Date of filing: 07.04.2016
(51) Int. Cl.: B32B 27/12, B32B 37/06

(54) **STACKED MATERIAL FOR FORMING COMPOSITE MATERIAL**

(30) Priority: 14.04.2015 KR 20150052471
(71) Applicant: Kolon Industries, Inc., Gwacheon-si, Gyeonggi-do 13837 (KR)
(72) Inventor: LEE, Hyun Chul, Yongin-si Gyeonggi-do 16910 (KR); CHO, Eun Jeong, Yongin-si Gyeonggi-do 16910 (KR); YOON, Joon Young, Yongin-si Gyeonggi-do 16910 (KR)
(74) Representative: Merkle, Gebhard
(86) International application number: PCT/KR2016/003638
(87) International publication number: WO 2016/167514

(57) **Abstract**

The present invention provides a laminate for forming a composite material having a structure in that unidirectional yarn sheets S in which yarns are arranged in parallel to each other in one direction without bending, and thermoplastic resin films F are alternately stacked, so that the thermoplastic resin film F is located between the unidirectional yarn sheets S. In addition, the unidirectional yarn sheets S and the thermoplastic resin films F having a degree of crystallinity XC of 30% or less are integrally coupled by a stitching yarn Y, and the adjacent unidirectional yarn sheets S are obliquely stacked at an inclined angle of ±1° to ±90° to a direction in which the yarns included in the respective unidirectional yarn sheets S are arranged. The present invention includes the unidirectional yarn sheets S instead of fabrics or multi-axial fabrics, and therefore, achieves excellent smoothness and the composite material manufactured using the same has uniform physical properties such as a strength. At the same time, since the thermoplastic resin film F having an appropriate degree of crystallinity and thickness is stacked between the unidirectional yarn sheets S, even if the unidirectional yarn sheet has a high weight per unit area of 200 g/m² or more, impregnation of the thermoplastic resin in the unidirectional yarn sheets S may be enhanced during forming a composite material.

## Description

### [Technical Field]

The present invention relates to a stacked material ('laminate') for forming a composite material, and more particularly, to a laminate for forming a composite material which includes unidirectional yarn sheets and has improved physical properties such as a strength during forming a composite material, since a thermoplastic resin film is located between the unidirectional yarn sheets, while the thermoplastic resin can be smoothly impregnated into the unidirectional yarn sheets during forming the composite material even if the laminate has a higher weight.

Hereinafter, the term 'unidirectional yarn sheet' means a yarn sheet in which yarns are arranged in parallel to each other in one direction without bending or crossing.

### [Background Art]

The composite material is usually formed by impregnating a fiber structure such as fabric with a resin and curing (thermosetting) the same, and is broadly used as a material for automobile parts or a material for bullet-proof products.

Among conventional laminates for forming composite materials, a laminate in which multiple sheets of fabric are stacked one above another has been used, as described in Korean Patent Laid-Open Publication No. 10-2014-0073104. After impregnating a thermosetting resin into a laminate having a multi-layered structure of stacked fabrics by a resin transfer molding (RTM) process, etc., curing or heat treatment is executed to form the composite material.

However, the conventional laminate of stacked fabrics for a composite material entails a decrease in smoothness due to a structure in which yarns of the fabrics are bent and crossed each other. As a result, when forming the composite material using the conventional laminate, physical properties such as a strength of the formed composite material is deteriorated.

As another conventional laminate for a composite material used in the art, there is a laminate in which unidirectional sheets in which yarns are arranged in parallel to each other in one direction without bending are obliquely stacked at an angle not horizontal to a direction of the yarns included therein, as described in Korean Patent Laid-Open Publication No. 10-2012-0013364.

As described above, after impregnating the thermosetting resin into the laminate including unidirectional yarn sheets stacked one above another by the RTM process, etc., curing or heat treatment is executed to form a composite material.

However, although the conventional laminate for forming a composite material, in which the unidirectional yarn sheets are stacked, has favorable smoothness thus to partly reduce the problem of deteriorating physical properties such as a strength of the composite material, there is another problem of less impregnation of the resin into the unidirectional yarn sheet if the unidirectional yarn sheet has a high weight per unit area of 200 g/m² or more.

In recent years, a need for manufacturing a composite material by impregnating a thermoplastic resin not the thermosetting resin is growing. However, since the thermoplastic resin has a higher viscosity than the thermosetting resin, if a weight of continuous and reinforced fiber per unit area is high, it is difficult to impregnate a texture with the resin, hence reducing uniformity and physical properties of the composite material. Most of these problems are caused by irregular impregnation of the thermoplastic resin due to a high melting point.

### [Disclosure]

### [Technical Problem]

Therefore, it is an object of the present invention to provide a laminate for forming a composite material, which includes unidirectional yarn sheets with excellent smoothness and thermoplastic resin films stacked between the unidirectional resin films, so that physical properties such as a strength of the formed composite material become uniform, and the thermoplastic resin is reliably impregnated into the unidirectional yarn sheets even if the unidirectional yarn sheet has a high weight per unit area of 200 g/m² or more.

### [Technical Solution]

In order to accomplish the above object, the present invention prepares a laminate for forming a composite material by alternately stacking unidirectional yarn sheets S in which yarns are arranged in parallel to each other in one direction without bending, and thermoplastic resin films F having a degree of crystallinity XC of 30% or less, so that the thermoplastic resin film F is located between the unidirectional yarn sheets S; and then, integrally coupling the unidirectional yarn sheets S and the thermoplastic resin films by a stitching yarn Y.

In this case, the adjacent unidirectional yarn sheets S of the present invention may be obliquely stacked at an inclined angle of ±1° to ±90° to a direction in which the yarns included in the respective unidirectional yarn sheets S are arranged.

### [Advantageous Effects]

The present invention includes the above-described unidirectional yarn sheets S instead of fabrics or multi-axial fabrics, and therefore, achieves excellent smoothness and the composite material manufactured using the same has uniform physical properties such as a strength. At the same time, since the thermoplastic resin film F having an appropriate degree of crystallinity and thickness is stacked between the unidirectional yarn sheets S, even if the unidirectional yarn sheet has a high weight per unit area of 200 g/m² or more, impregnation of the thermoplastic resin in the unidirectional yarn sheets S may be enhanced during forming a composite material.

### [Description of Drawings]

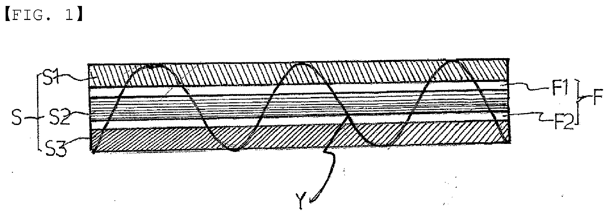

FIG. 1 is a schematic sectional view illustrating a laminate for forming a composite material of the present invention.

### [Best Mode]

Hereinafter, the present invention will be described in detail with reference to the accompanying drawing.

As illustrated in FIG. 1, a laminate for forming a composite material of the present invention is characterized by having a structure in that unidirectional yarn sheets S in which yarns are arranged in parallel to each other in one direction without bending, and thermoplastic resin films F having a degree of crystallinity XC of 30% or less are alternately stacked, so that the thermoplastic resin film F is located between the unidirectional yarn sheets S, wherein the unidirectional yarn sheets S and the thermoplastic resin films F are integrally coupled by a stitching yarn Y, and the adjacent unidirectional yarn sheets S are obliquely stacked at an inclined angle of ±1° to ±90° to a direction in which the yarns included in the respective unidirectional yarn sheets S are arranged.

FIG. 1 is a schematic sectional view illustrating the complex material for forming a composite material according to the present invention.

More particularly, the laminate for forming a composite material of the present invention has a structure in that the unidirectional yarn sheets S in which yarns are arranged in parallel to each other in one direction without bending and the thermoplastic resin films F having a degree of crystallinity XC of 30% or less are alternately stacked one above another, while the thermoplastic resin film F is located between the unidirectional yarn sheets S.

In addition, according to the present invention, the unidirectional yarn sheets S and the thermoplastic resin films F are integrally coupled by the stitching yarn Y.

Further, according to the present invention, the adjacent unidirectional sheets S, in particular, as shown in FIG. 1, a first unidirectional yarn sheet S1 and a second unidirectional yarn sheet S2, or the second unidirectional yarn sheet S2 and a third unidirectional yarn sheet S3 are obliquely stacked at an inclined angle of ±1° to ±90°, preferably, ±30° to ±80° not horizontal (0°) to a direction in which the yarns included in the respective unidirectional yarn sheets S are arranged.

The number of the stacked unidirectional yarn sheets S is at least three, while the number of the stacked thermoplastic resin films F is preferably at least two in order to enhance physical properties of the composite material.

The thermoplastic resin film F has a degree of crystallinity XC of 30% or less, and a thickness of 80 to 200 µm, and more preferably, 30 to 50 µm.

If the thickness of the thermoplastic resin film F is less than 8 µm, it is difficult to uniformly impregnate the unidirectional yarn sheets S with a resin. If the thickness thereof exceeds 200 µm, the resin is impregnated too much into the unidirectional sheets S to undesirably cause a deterioration in a specific stiffness.

If the degree of crystallinity XC of the thermoplastic resin film F exceeds 30%, heat-shrinking of the thermoplastic resin film F may seriously occur during forming the composite material, hence irregularly impregnating the unidirectional yarn sheet S with the resin.

The thermoplastic resin film F may consist of, for example, a polyamide 6 resin, polypropylene resin, thermoplastic polyurethane resin, polyester resin, polyphenylenesulfide resin, polyether etherketone resin, etc., and in the present invention, the number of layers of thermoplastic resin films F or a type of the resin is not particularly limited.

The present invention provides a fiber structure to form the laminate, which is formed using the unidirectional yarn sheet S with superior smoothness over fabrics, so as to uniformly maintain physical properties such as a strength of the formed composite material.

Further, according to the present invention, the thermoplastic resin film F is located between the unidirectional yarn sheets S, and therefore, even if the unidirectional yarn sheet has a high weight per unit area of 200 g/m² or more wherein the unidirectional yarn sheet S is formed by stacking at least three layers of unidirectional sheets, the resin may be smoothly impregnated into the unidirectional yarn sheet S through thermal compression.

Furthermore, according to the present invention, the adjacent unidirectional yarn sheets S are obliquely stacked at an inclined angle of ±1° to ±90° to a direction in which the yarns included in the respective unidirectional yarn sheets S are arranged so as to form a multi-axial shape, and thereby more improving the physical properties of the formed composite material.

Next, with regard to one embodiment of the formation of composite fibers as a complex material used for forming a composite material, the complex material for forming a composite material according to the present invention wherein unidirectional yarn sheets S and thermoplastic resin films F are alternately stacked one above another is fed in a forming mold, heated to at least a first glass transition temperature Tg of the thermoplastic resin film F to prepare a primary shape, and then, further heated and pressed such that the thermoplastic resin film F is completely fused and impregnated into the unidirectional yarn sheet S, thereby forming the composite material. The thermoplastic resin films F included in the complex material during the above formation process are fused and uniformly impregnated into the unidirectional yarn sheets S.

According to the present invention, it is possible to minimize a depth of penetration of the thermoplastic resin obtained by fusing the thermoplastic resin film F into the unidirectional yarn sheet S, and arrange the resin at an equidistant interval, so that the thermoplastic resin is uniformly impregnated into the unidirectional yarn sheet S.

The above configuration has advantages in that, compared to the penetration of a thermosetting or thermoplastic resin into an upper side or both of upper and lower sides of the unidirectional yarn sheet S, a depth of penetration is low and the resin can be uniformly impregnated regardless of the thickness of the unidirectional yarn sheet S.

Hereinafter, preferred embodiments of the present invention will be described in detail with reference to examples and comparative examples.

However, it would be appreciated that the following examples are proposed for illustrative purpose of the present invention only and do not limit subject matters to be protected as disclosed in the appended claims.

### Example 1

As illustrated in FIG. 1, a first unidirectional yarn sheet S1, a second unidirectional yarn sheet S2 and a third unidirectional yarn sheet S3, in which aramid yarns are arranged in parallel to each other in one direction without bending, respectively, and a first thermoplastic polyurethane resin film F1 having a degree of crystallinity XC of 12% and a second polyurethane resin film F2 having a degree of crystallinity XC of 18% were alternately stacked so that the first thermoplastic resin film F1 is located between the second unidirectional yarn sheet S2 and the third unidirectional yarn sheet S3, while the second thermoplastic resin film F2 is located between the first unidirectional yarn sheet S1 and the second unidirectional yarn sheet S2.

Herein, the first unidirectional yarn sheet S1 and the second unidirectional yarn sheet S2 which are adjacent to each other were obliquely stacked at an inclined angle of 45° to a direction in which the yarns included in these sheets are arranged, while the second unidirectional yarn sheet S2 and the third unidirectional yarn sheet S3 which are adjacent to each other were obliquely stacked at an inclined angle of 60° to a direction in which the yarns included in these sheets are arranged.

Next, three unidirectional yarn sheets S1, S2 and S3 and two thermoplastic resin films F1 and F2 alternately stacked one above another as described above were integrally coupled using a stitching yarn Y, thus to prepare a laminate for forming a composite material.

Following that, the prepared laminate for forming a composite material was heated to 250°C and pressed with a pressure of 5 Mpa/cm², thereby forming the composite material.

### Comparative Example 1

Three sheets of woven fabric made of aramid yarn were stacked to prepare a laminate for forming a composite material.

Next, after impregnating the prepared laminate with a resin by an RTM process, heat treatment was conducted thereon to form a composite material.

### Comparative Example 2

As shown in FIG. 1, a first unidirectional yarn sheet S1, a second unidirectional yarn sheets S2 and a third unidirectional yarn sheets S3, in which aramid yarns are arranged in parallel to each other in one direction without bending, respectively, and a first thermoplastic polyurethane resin film F1 made of thermoplastic polyurethane resin having a degree of crystallinity XC of 36% and a second thermoplastic polyurethane resin film F2 having a degree of crystallinity XC of 33% were alternately stacked one above another, so that the first thermoplastic resin film F1 is located between the second unidirectional yarn sheet S2 and the third unidirectional yarn sheet S3, while the second thermoplastic resin film F2 is located between the first unidirectional yarn sheet S1 and the second unidirectional yarn sheet S2.

In this case, the first unidirectional yarn sheet S1 and the second unidirectional yarn sheet S2 which are adjacent to each other were stacked one above another at a horizontal angle 0° to a direction in which the yarns included in these sheets are arranged, while the second unidirectional yarn sheet S2 and third unidirectional yarn sheet S3 which are adjacent to each other were stacked one above another at an inclined angle 90° to a direction in which the yarns included in these sheets are arranged.

Next, three unidirectional yarn sheets S1, S2 and S3 and two thermoplastic resin films F1 and F2 alternately stacked one above another as described above were integrally coupled using a stitching yarn Y, thus to prepare a laminate for forming a composite material.

Following this, the prepared laminate for forming a composite material was heated to 250°C and pressed with a pressure of 5 Mpa/cm², thereby forming the composite material.

The resin was impregnated well into the laminate for a composite material in Example 1 during formation. However, compared to Example 1, the laminate in Comparative Example 1 was poorly impregnated with the resin.

The composite material prepared in Example 1 showed improved strength by 10%, compared to the composite material prepared in Comparative Example 1.

The thermoplastic resin films F1 and F2 in Example 1 did not show an occurrence of significant heat-shrinkage during formation of a composite material thus to uniformly impregnate the unidirectional yarn sheets S1, S2 and S3 with the resin. However, the thermoplastic resin films F1 and F2 in Comparative Example 2 showed an occurrence of significant heat-shrinkage, and therefore, the unidirectional yarn sheets S1, S2 and S3 were irregularly impregnated with the resin.

### [Description of Reference Numerals]

S: Unidirectional yarn sheet, F: Thermoplastic resin film
Y: Stitching yarn, S1: First unidirectional yarn sheet
S2: Second unidirectional yarn sheet, S3: Third unidirectional yarn sheet
F1: First thermoplastic resin film, F2: Second thermoplastic resin film

### [Industrial Applicability]

The laminate according to the present invention is used as a material for forming a variety of composite materials.

## Claims

1. A laminate for forming a composite material, **characterized by** having a structure in that unidirectional yarn sheets S in which yarns are arranged in parallel to each other in one direction without bending, and thermoplastic resin films F having a degree of crystallinity XC of 30% or less are alternately stacked, so that the thermoplastic resin film F is located between the unidirectional yarn sheets S,
wherein the unidirectional yarn sheets S and the thermoplastic resin films F are integrally coupled by a stitching yarn Y, and
the adjacent unidirectional yarn sheets S are obliquely stacked at an inclined angle of ±1° to ±90° to a direction in which the yarns included in the respective unidirectional yarn sheets S are arranged.

2. The laminate for forming a composite material according to claim 1, wherein the adjacent unidirectional yarn sheets S are obliquely stacked at an inclined angle of ±30° to ±80° to the direction in which the yarns included in the respective unidirectional yarn sheets S are arranged.

3. The laminate for forming a composite material according to claim 1, wherein at least three (3) unidirectional yarn sheets S are stacked.

4. The laminate for forming a composite material according to claim 1, wherein at least two (2) thermoplastic resin films F are stacked.

5. The laminate for forming a composite material according to claim 1, wherein the thermoplastic resin film F has a thickness of 10 to 200 µm.

6. The laminate for forming a composite material according to claim 1, wherein the thermoplastic resin film F has a thickness of 30 to 50 µm.

7. A composite material sheet manufactured by heating and pressing the laminate for forming a composite material according to claim 1.
